# DEMANDE DE BREVET EUROPEEN

(11) **EP 4 817 967 A1**
(43) Date de publication de la demande: **07.10.2026**
(21) Numéro de dépôt: 26170130.4
(22) Date de dépôt: 01.04.2026
(51) Int. Cl.: B60R 21/231, B60R 21/2338

(54) **SIEGE DE VEHICULE AUTOMOBILE EQUIPE DE COUSSINS GONFLABLES DOMAINE TECHNIQUE DE L'INVENTION**

(30) Priorité: 02.04.2025 FR 2503450
(71) Demandeur: Renault s.a.s, 92100 Boulogne Billancourt (FR)
(72) Inventeur: LESBATS, Fabrice, 78280 Guyancourt (FR); RUFFET, Renaud, 78280 Guyancourt (FR); LECROISEY, Sebastien, 78280 Guyancourt (FR)

(57) **Abrégé**

L'invention concerne un siège (1) de véhicule automobile, comportant :
- un dossier (20),
- une assise (10) comportant une ossature recouverte, au moins sur une face supérieure, d'une garniture (19), et
- un dispositif de retenue d'un occupant (90) du siège, comprenant au moins deux coussins gonflables de sécurité (40, 41) qui, lorsqu'ils sont gonflés, sont adaptés à se déployer de part et d'autre de l'occupant, et au moins deux brides (50, 51, 52, 53) qui sont respectivement couplées aux deux coussins gonflables de sécurité (40), une extrémité de chaque bride étant fixée au dossier tandis que l'autre extrémité est fixée à un prétensionneur logés sous l'ossature de l'assise).

## Description

### DOMAINE TECHNIQUE DE L'INVENTION

La présente invention concerne de manière générale la sécurité des passagers de véhicules automobiles.

Elle concerne plus particulièrement un siège de véhicule automobile, comportant :
- un dossier,
- une assise comportant une ossature recouverte, au moins sur une face supérieure, d'une garniture, et
- un dispositif de retenue d'un occupant du siège, comprenant, d'une part, au moins un coussin gonflable de sécurité qui, lorsqu'il est gonflé, est adapté à se déployer sur un côté au moins de l'occupant, et, d'autre part, au moins une bride qui est couplée audit coussin gonflable de sécurité et dont une extrémité est fixée au dossier ou à l'assise.

Elle concerne également un véhicule automobile équipé d'un tel siège.

### ETAT DE LA TECHNIQUE

Actuellement, les airbags sont logés dans le volant du véhicule, dans le tableau de bord et au-dessus des fenêtres (on parle d'airbag rideau), afin de pouvoir se déployer autour du conducteur et du passager avant en cas de choc.

Les emplacements de ces airbags ne sont pas idéaux puisqu'ils occupent une place importante au sein de la planche de bord et du volant. Les airbags rideaux occupent également beaucoup de place, occasionnant des pertes de volumes pour l'implantation des poignées de pavillon ou encore pour obtenir une largeur maximale de toit ouvrant.

En outre, dans le cadre de l'autonomisation des véhicules automobiles, il s'avère nécessaire de revoir cet agencement, pour tenir compte du fait que le conducteur ne se tiendra plus nécessairement face à la route, volant entre les mains, mais qu'il pourra adopter des attitudes différentes.

Dans cette perspective, une nouvelle catégorie d'airbags dits « cocons » ou SCRS (de l'anglais « Seat Centric Restraint System ») a commencé à être développée par la demanderesse.

Ainsi, on connaît notamment du document FR3131258 un siège équipé, dans chacun des deux flancs de son dossier, d'un coussin gonflable. Ces deux coussins sont prévus pour se gonfler en cas de choc de telle façon qu'ils se déploient de part et d'autre de l'occupant du siège puis devant lui.

Pour s'assurer que les deux coussins se gonflent dans la position souhaitée, ce document explique que deux brides (ici des sangles) sont cousues sur chaque coussin. Chaque sangle présente une extrémité supérieure fixée au dossier et une extrémité inférieure fixée à l'ossature de l'assise, et plus précisément à une traverse dite anti-sous-marinage.

Chaque sangle est initialement logée dans le siège, en passant pour cela le long d'un côté de l'assise et du dossier.

Elle est dès lors plus longue que nécessaire pour assurer sa fonction de positionnement du coussin lors du gonflage de ce dernier. A titre d'exemple, la longueur d'une sangle est de l'ordre de 1,3 m afin de pouvoir être correctement rangée dans le siège, alors que sa longueur utile pour pouvoir guider efficacement le sac gonflable lors de son gonflement doit être de l'ordre de 1 m.

La solution présentée dans le document FR3131258 pour résoudre ce problème de longueur consiste à prévoir dans le coussin gonflable une poche supplémentaire qui, lors du gonflage du coussin, permet de tendre la sangle de façon à ce que cette dernière puisse assurer sa fonction.

Cette solution s'avère malheureusement contraignante puisqu'elle requiert des coussins de plus grandes tailles et davantage d'air pour les gonfler. En outre, avec cette solution, les sangles ne sont tendues qu'en fin de gonflage, si bien qu'elles ne peuvent assurer correctement leur fonction pendant le gonflage des coussins.

### PRESENTATION DE L'INVENTION

Afin de remédier aux inconvénients précités de l'état de la technique, la présente invention propose de fixer l'une des extrémités de chaque bride à un prétensionneur.

Plus particulièrement, on propose selon l'invention un siège tel que défini dans l'introduction, dans lequel l'autre extrémité de chaque bride est fixée respectivement à l'assise ou au dossier via un prétensionneur.

Ainsi, grâce à l'invention, les brides peuvent être logées sur les côtés du siège puis être tendue très rapidement en cas de choc, de façon à ce qu'elles assurent rapidement leur fonction, sans nécessairement attendre la fin du gonflage des coussins.

De préférence, il est prévu deux prétensionneurs qui sont logés ensemble, sous la face supérieure de l'ossature de l'assise, de façon compacte, ce qui facilite leur connexion au réseau électrique du véhicule. Ils sont ainsi logés dans une zone du véhicule où les contraintes sont moins grandes que dans la planche de bord par exemple.

Du fait de leurs positions, ils ne génèrent aucun problème d'inconfort pour l'occupant du siège.

La position de chaque prétensionneur lui permet en outre d'assurer un déploiement optimal des brides et donc des coussins en un temps limité, ce qui garantit une bonne retenue de l'occupant du siège. Ce déploiement reste en outre optimal quelle que soit la position du siège dans le véhicule, l'inclinaison du dossier par rapport à l'assise, et la morphologie de l'occupant du siège.

D'autres caractéristiques avantageuses et non limitatives du siège conforme à l'invention, prises individuellement ou selon toutes les combinaisons techniquement possibles, sont les suivantes :
- chaque prétensionneur est fixé à l'ossature de l'assise ;
- chaque prétensionneur est logé sous la face supérieure de l'ossature de l'assise ;
- l'ossature de l'assise comportant deux flancs connectés, à l'opposé du dossier, par une traverse, chaque prétensionneur est logé dans ou sous la traverse ;
- chaque prétensionneur est fixé à l'ossature de l'assise ;
- le dispositif de retenue comprend :
   ¤ au moins deux coussins gonflables de sécurité qui, lorsqu'ils sont gonflés, sont adaptés à se déployer de part et d'autre de l'occupant,
   ¤ au moins deux brides qui sont respectivement couplées aux deux coussins gonflables de sécurité, et
   ¤ au moins deux prétensionneurs respectivement fixés aux deux brides ;
- chaque prétensionneur présentant une forme allongée selon un axe principal, les axes principaux des prétensionneurs sont parallèles ;
- le dossier étant articulé par rapport à l'assise autour d'un axe transversal, les axes principaux des prétensionneurs sont parallèles à l'axe transversal ;
- les deux prétensionneurs sont positionnés tête-bêche ;
- il est prévu au moins une autre bride dont une extrémité est fixée au dossier et dont une autre extrémité est fixée à ladite bride ;
- ladite bride comporte, sur un tronçon s'étendant du dossier à la jonction avec l'autre bride, une sangle et, sur un tronçon restant, une corde ;
- l'une au moins desdites brides passe au travers d'une ouverture et/ou d'un passant d'un des deux coussins gonflables de sécurité.

L'invention concerne également un véhicule automobile comportant un plancher et au moins un siège tel que précité, monté sur le plancher.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un siège conforme à l'invention, sur laquelle les coussins sont représentés en position déployée ;
[Fig. 2] est une vue schématique en perspective de l'ossature d'assise du siège de la figure 1, sur laquelle une partie avant de l'ossature a été représenté en transparence ;
[Fig. 3] est une vue schématique de côté de l'ossature d'assise du siège de la figure 1.

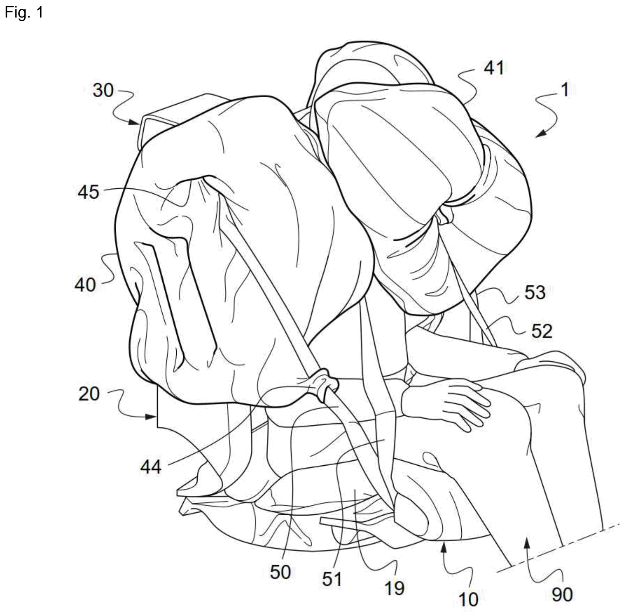

Sur la figure 1, on a représenté un siège 1 dans lequel est assis un occupant 90.

Ce siège 1 est ici installé dans l'habitacle d'une voiture. En variante, il pourrait être installé dans l'habitacle de tout autre type de véhicule automobile (camion, avion, wagon...).

Il s'agit ici du siège du conducteur de ce véhicule. Mais il pourrait aussi bien s'agir d'un autre des sièges du véhicule, notamment du siège passager (situé à côté du siège conducteur) ou même d'un siège situé à l'arrière du siège conducteur.

Dans la suite de la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes « inférieur » (ou « bas ») et « supérieu » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

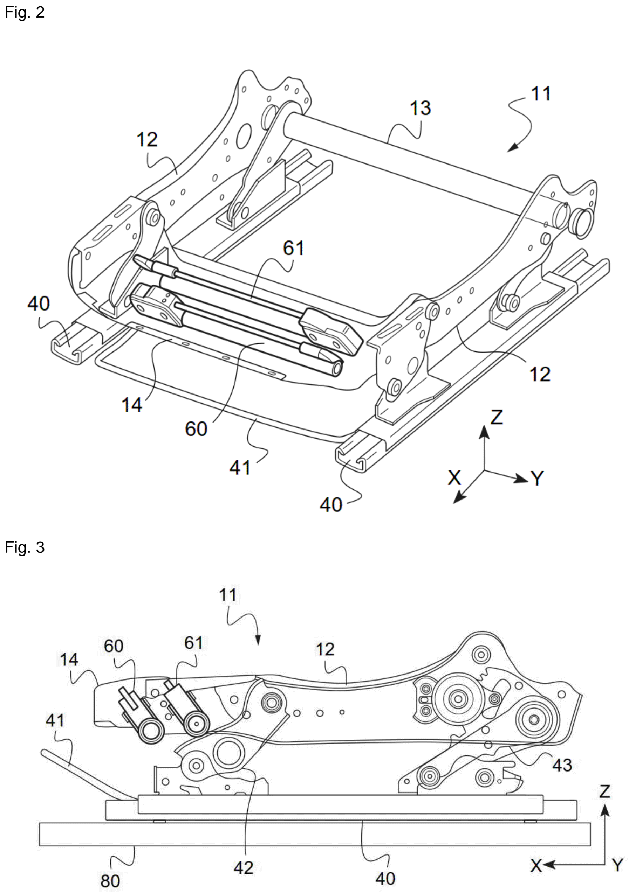

On a représenté sur les figures 2 et 3 un repère orthonormé dans lequel l'axe X est longitudinal et orienté vers l'avant, l'axe Y est transversal et orienté vers la gauche du véhicule, et l'axe Z est vertical.

Comme le montre la figure 1, le siège 1 comporte classiquement une assise 10 et un dossier 20 équipé d'un appui-tête 30. Le dossier et l'assise comprennent chacun une ossature, une garniture (ou mousse) rapportée sur l'ossature, et une housse couvrant la garniture.

La garniture du dossier et/ou de l'assise présente une partie centrale sensiblement plane, sur laquelle l'occupant peut principalement s'appuyer, et deux rebords latéraux qui sont situés de part et d'autre de la partie centrale et qui permettent de retenir l'occupant dans son siège lorsque le véhicule tourne.

L'ossature du dossier et/ou de l'assise est par exemple formée de pièces métalliques fixées ensemble.

Ici, on s'intéressera davantage à l'ossature 11 de l'assise 10. Comme le montrent les figures 2 et 3, cette ossature 11 comporte dans cet exemple deux flancs latéraux 12 métalliques, connectés rigidement ensemble par des éléments de liaison métalliques. Les deux flancs latéraux 12 s'étendent dans des plans verticaux parallèles. Une nappe (non représentée) de retenue de la garniture, par exemple formée de fils métalliques entrecroisés, s'étend entre les deux flancs latéraux 12.

Parmi les éléments de liaison métalliques, il est prévu à l'arrière de l'ossature une barre transversale 13. Il est par ailleurs prévu à l'avant une traverse dite anti-sous-marinage 14. On rappellera ici que le sous-marinage correspond au phénomène de glissement du bassin d'un occupant sous la ceinture de sécurité lors d'un choc frontal, ce qui peut lui occasionner des blessures graves, notamment abdominales.

La traverse anti-sous-marinage 14 est donc une structure intégrée à l'assise 10, qui a pour fonction de limiter le phénomène de sous-marinage.

Cette traverse anti-sous-marinage 14 pourrait se présenter sous des formes différentes. Il s'agit ici d'une plaque métallique emboutie fixées aux flancs latéraux 12, par exemple par rivetage, soudage ou vissage.

Cette plaque métallique emboutie présente une partie plane située sous la garniture 19 de l'assise 10, dont la face supérieure est inclinée vers l'arrière pour s'opposer au phénomène de sous-marinage.

Bien entendu, en variante, cette ossature 11, et notamment cette traverse anti-sous-marinage 14, pourrait se présenter autrement, par exemple sous la forme d'une coque en matière plastique fibrée.

Le siège 1 présente différentes mobilités.

Dans le mode de réalisation illustré sur les figures 2 et 3, l'assise 10 est prévue pour être montée mobile en hauteur sur le plancher 80 du véhicule et mobile d'avant en arrière sur le plancher 80.

Le siège 1 comporte à cet effet deux glissières 40 et un système de rehausse standards, ici mécanique (mais qui pourraient en variante être à commande électrique).

Chaque glissière 40 comporte un premier rail fixé au plancher, et un second rail monté coulissant sur le rail fixe, d'avant en arrière. Des moyens de blocage permettent de verrouiller cette mobilité de coulissement. Un levier 41 accessible à l'occupant 90 du siège 1, permet, lorsque l'occupant du siège souhaite avancer ou reculer son siège 1, de désactiver provisoirement ces moyens de blocage.

Le système de rehausse comporte pour sa part deux paires de bielles 42, 43 articulées chacune, d'un côté, sur l'un des seconds rails et, de l'autre, sur l'un des flancs 12 de l'ossature de l'assise 10, autour d'un axe transversal. Des moyens de manœuvre (non représentés) permettant de commander la levée ou l'abaissement de l'assise 10.

Ici, le dossier 20 est monté sur l'ossature 11 de l'assise 10 avec une mobilité de basculement autour d'un axe transversal (l'axe Y), sur une course supérieure à 10 degrés. Il comporte des moyens de blocage et de réglage de cette mobilité, se présentant par exemple sous la forme d'une molette pivotante.

Le siège 1 est par ailleurs équipé d'un système de ceinture de sécurité (non visible). Ce système de ceinture de sécurité pourrait être du type à deux points (avec une sangle ventrale qui s'attache de part et d'autre du bassin de l'occupant du siège) ou à trois points (avec une sangle dont une extrémité est fixée d'un premier côté du siège, au niveau de l'assise, dont l'autre s'enroule dans un enrouleur fixé au châssis du véhicule ou au dossier, de ce même premier côté, et qui s'attache par une boucle de l'autre côté du siège), voire à quatre points.

Le siège 1 est équipé d'un dispositif de retenue de l'occupant en cas de choc, c'est-à-dire d'un dispositif permettant de retenir le conducteur et d'amortir le choc qu'il ressent lorsque la voiture percute ou est percutée par un obstacle. Ici, ce dispositif de retenue est conçu pour assurer cette fonction quel que soit le type de choc (frontal, latéral, arrière, tonneaux...).

Ce dispositif de retenue est intégré au siège 1. Un avantage de cette intégration est que la position du siège dans l'habitacle (plus ou moins avancé et plus ou moins haut) est sans impact sur son fonctionnement.

Comme le montre la figure 1, le dispositif de retenue comporte au moins un système dit d'airbag. Ici, il en comporte très préférentiellement deux.

Chaque système comporte au moins un coussin gonflable de sécurité, ci-après plus simplement appelé coussin 40, 41. On considérera que chaque système comporte ici un unique coussin 40, 41.

Ces deux coussins 40, 41 sont situés de part et d'autre du conducteur 20. A l'état non gonflé, ils sont en effet repliés dans les flancs du dossier. Lors de leur gonflage, ils sont prévus pour se déployer de part et d'autre de l'occupant 90 du siège 1.

Ici, ils présentent des formes différentes, l'un des coussins (côté portière) étant prévu pour se déployer à l'avant de la tête de l'occupant lorsque l'autre des coussins se déploie essentiellement sur un côté de l'occupant et devant l'une de ses épaules.

Bien entendu, en variante, les coussins pourraient présenter des formes différentes de celles illustrées sur la figure 1.

Chaque système d'airbag comporte en outre au moins une bride 50, 51, 52, 53 associée au coussin 40, 41.

Une « bride » est ici définie comme un élément allongé, souple mais non extensible selon sa longueur (ou très peu extensible). Elle est de préférence réalisée par tissage ou torsion de fils en matière textile ou synthétique ou encore métallique. Une telle bride peut typiquement se présenter sous la forme d'une sangle (par exemple du type des sangles de ceinture de sécurité) ou d'une corde.

La fonction de ces brides 50, 51, 52, 53 est de garantir le déploiement des coussins 40, 41 dans la position requise et/ou de retenir l'occupant 90 plaqué contre son siège 1 lors d'un choc.

Les brides 50, 51, 52, 53 sont dites « couplées » aux coussins 40, 41 en ce sens qu'elles sont cousues aux coussins et/ou qu'elles passent au travers de passants 44 fixés aux coussins ou d'ouvertures 45 prévus dans les coussins.

Une ouverture est ici définie comme une fenêtre au contour fermé pratiquée dans le coussin. Un passant 44 est pour sa part définie comme une pièce (par exemple de tissu) qui est attachée (par exemple cousue) sur l'un des coussins et qui délimite un passage pour une bride.

Ici, aucune des brides 50, 51, 52, 53 n'est cousue sur les coussins 40, 41, de façon à ce qu'elles restent libres de glisser sur les coussins.

On pourrait prévoir qu'une unique bride soit associée à chaque coussin. Toutefois, ici, chaque coussin 40, 41 est associé à deux brides 50, 51, 52, 53.

En pratique, l'une des deux brides 50, 53 associées à chaque coussin 40, 41 est prévue, lorsque ce coussin se gonfle, pour passer du côté extérieur du coussin par rapport à l'occupant 90, puis pour traverser une ouverture 45 pratiquée dans ce coussin afin de se rattacher par son extrémité supérieure à l'ossature du dossier 20. Sa fonction première est de positionner et retenir le coussin dans une position adéquate lors du choc.

L'autre des deux brides 51, 52 associées à chaque coussin et prévue pour passer entre le coussin et l'occupant 90, afin de s'appliquer contre l'épaule de l'occupant dans le but de le retenir contre le dossier 20.

Les deux brides 50, 51, 52, 53 associées à chaque coussin sont distinctes sur une partie haute de leurs longueurs. Elles se rejoignent en partie basse.

Les parties distinctes des brides sont ici formées par des sangles, alors que les parties basses communes des brides sont formées par des cordes.

Autrement formulé, les deux brides 50, 51, 52, 53 associées à chaque coussin comportent une partie basse commune en corde, qui se subdivise en deux parties hautes se présentant sous la forme de sangles.

Bien entendu, le nombre et les formes des brides pourraient être différents de ceux illustrés sur les figures.

Ici, l'extrémité basse de chaque bride est fixée à un prétensionneur 60, 61 (voir figures 1 et 2).

On rappelle ici qu'un prétensionneur, également appelé prétendeur, est un dispositif de sécurité automobile qui est généralement associé à la ceinture de sécurité. Lorsqu'il est fixé à une extrémité de la sangle d'une ceinture de sécurité, il permet, en cas d'accident, d'exercer une traction sur cette ceinture pour retenir l'occupant plaqué contre son siège.

Ici, les prétensionneurs 60, 61 sont fixés aux extrémités basses des brides 50, 51, 52, 53. Par « fixé », on entend qu'ils y sont liés de telle sorte qu'en cas d'accident, ils puissent exercer une traction sur ces brides pour aider à positionner les coussins 40, 41 dans la position adéquate et/ou pour retenir l'occupant 90 plaqué contre son siège 1.

Dans le mode de réalisation illustré, il est prévu exactement deux prétensionneurs 60, 61 qui sont respectivement connectés aux deux cordes précitées.

Techniquement, un prétensionneur se présente généralement sous la forme d'un vérin, avec un piston qui est adapté à coulisser dans un fourreau et qui est rattaché à la corde de la bride, directement ou via un accessoire tel qu'un câble ou une tige métallique. Ici, ce fourreau est de forme cylindrique de révolution. Un tel prétensionneur est équipé d'un système d'actionnement adapté à exercer un effort de traction sur le piston, et est associé à un système de déclenchement du système d'actionnement en cas d'accident (qui comprend par exemple un accéléromètre). Ces deux systèmes étant bien connus de l'Homme du métier, ils ne seront pas ici décrits en détail. On pourra seulement indiquer que le système d'actionnement pourrait comporter un ressort précontraint, ou une cartouche de gaz sous pression, ou encore un dispositif pyrotechnique. Quant au système de déclenchement, il pourrait être centralisé et afin de déclencher simultanément les deux systèmes d'actionnement des deux prétensionneurs (voir aussi le gonflement des coussins), ou être indépendant (auquel cas chaque prétensionneur serait équipé de son propre système de déclenchement).

Les prétensionneurs 60, 61 sont situés sous la face supérieure de l'ossature 11 de l'assise 10.

Ici, la face supérieure de l'ossature 11 de l'assise 10 passe notamment par la face supérieure de la traverse anti-sous-marinage 14 et les bords supérieurs des flancs métalliques 12.

De manière préférentielle, les deux prétensionneurs 60, 61 sont installés sous la traverse anti-sous-marinage 14. Sur la figure 2, cette traverse a été représentée de façon partiellement transparente, pour laisser apparaître les deux prétensionneurs 60, 61.

Cet espace est en effet moins encombré que d'autres espaces du véhicule, notamment la planche de bord. Il est éloigné de la tête de l'occupant 90, ce qui est préférentiel si son système d'actionnement est pyrotechnique. Il est en outre idéalement positionné pour les brides dont les extrémités basses doivent être fixées à proximité du bord avant de l'assise. Enfin, cet espace est prévu pour ne pas entrer en contact avec un quelconque autre composant du véhicule, quelle que soit la position de l'assise (avancée ou reculée, abaissée ou réhaussée).

En outre, si la traverse anti-sous-marinage 14 est susceptible de se déformer en cas de choc, cette déformation est sans effet sur le fonctionnement des prétensionneurs 60, 61 qui auront déjà fait leur office avant que cette déformation ne se produise.

Ici, les deux prétensionneurs 60, 61 sont fixés à la traverse anti-sous-marinage 14.

Ils y sont ici fixés via des colliers vissés ou rivetés sur cette traverse.

Ils sont fixés de telle sorte que leurs axes principaux soient transversaux, c'est-à-dire parallèles à l'axe Y.

On entend ici par axe principal d'un prétensionneur l'axe dans lequel il s'étend selon sa plus grande longueur. Il s'agit ici des axes de révolution des cylindres formés par les fourreaux.

De façon préférentielle, les deux prétensionneurs 60, 61 sont positionnés tête-bêche. Ainsi, leurs pistons sont prévus pour coulisser dans des sens opposés en cas de déclenchement. Cet agencement est particulièrement compact. Il facilite en outre la connexion des prétensionneurs 60, 61 au réseau électrique du véhicule, notamment dans le cas où le système de déclenchement des prétensionneurs 60, 61 est centralisé.

Ici, chaque prétensionneur est associé à un système de renvoi, tel qu'une poulie, permettant de modifier la direction de l'effort de traction appliqué par le piston (selon l'axe principal), de sorte que cet effort de traction s'applique sur la bride dans l'axe de cette dernière.

La présente invention n'est nullement limitée au mode de réalisation décrit et représentés mais l'homme du métier saura y apporter toute variante conforme à l'invention.

Typiquement, la traverse anti-sous-marinage pourrait être surmoulée sur les prétensionneurs, qui se trouveraient alors situés à l'intérieur de celle-ci. Cette variante serait envisageable si la traverse était réalisée en matière plastique, préférentiellement fibrée.

Selon une autre variante de l'invention, si l'ossature de l'assise comportait un autre élément de liaison par exemple situé sous la traverse anti-sous-marinage 14 ou à l'arrière de celle-ci, les deux prétensionneurs pourraient être fixés à cet autre élément de liaison, en dessous de lui ou ailleurs (par exemple au-dessus de lui si cet autre élément de liaison est situé plus bas que la traverse anti-sous-marinage 14).

Selon d'autres variantes, les deux prétensionneurs pourraient être installés autrement que tête-bêche. Par exemple, ils pourraient être installés de façon à former un V sous la traverse anti-sous-marinage 14 ou de façon à s'étendre dans le prolongement l'un de l'autre.

Selon une autre variante, seule un des systèmes d'airbag pourrait comporter une bride attachée à un prétensionneur. L'autre système d'airbag pourrait être dépourvu de bride ou pourrait être équipé d'une bride dont les extrémités seraient directement fixées au dossier et à l'assise. Dans cette configuration, on pourrait prévoir que ce second système d'airbag dépourvu de prétensionneur soit conforme à ce qui est décrit dans le document FR3131258 précité.

## Revendications

1. Siège (1) de véhicule automobile, comportant :
- un dossier (20),
- une assise (10) comportant une ossature (11) recouverte, au moins sur une face supérieure, d'une garniture (19), et
- un dispositif de retenue d'un occupant (90) du siège (1), comprenant, d'une part, au moins un coussin gonflable de sécurité (40, 41) qui, lorsqu'il est gonflé, est adapté à se déployer sur un côté au moins de l'occupant (90), et, d'autre part, au moins une bride (50, 51, 52, 53) qui est couplée audit coussin gonflable de sécurité (40, 41) et dont une extrémité est fixée au dossier (20) ou à l'assise (10), **caractérisé en ce que** l'autre extrémité de chaque bride (50, 51, 52, 53) est fixée respectivement à l'assise (10) ou au dossier (20) via un prétensionneur (60, 61).

2. Siège (1) selon la revendication 1, dans lequel chaque prétensionneur (60, 61) est logé sous la face supérieure de l'ossature (11) de l'assise (10).

3. Siège (1) selon la revendication 2, dans lequel, l'ossature (11) de l'assise (10) comportant deux flancs (12) connectés, à l'opposé du dossier (20), par une traverse (14), chaque prétensionneur (60, 61) est logé dans ou sous la traverse (14).

4. Siège (1) selon l'une des revendications 1 à 3, dans lequel chaque prétensionneur (60, 61) est fixé à l'ossature (11) de l'assise (10).

5. Siège (1) selon l'une des revendications 1 à 4, dans lequel le dispositif de retenue comprend :
- au moins deux coussins gonflables de sécurité (40, 41) qui, lorsqu'ils sont gonflés, sont adaptés à se déployer de part et d'autre de l'occupant (90),
- au moins deux brides (50, 51, 52, 53) qui sont respectivement couplées aux deux coussins gonflables de sécurité (40, 41), et
- au moins deux prétensionneurs (60, 61) respectivement fixés aux deux brides (50, 51, 52, 53).

6. Siège (1) selon la revendication 5, dans lequel, chaque prétensionneur (60, 61) présentant une forme allongée selon un axe principal, les axes principaux des prétensionneurs (60, 61) sont parallèles.

7. Siège (1) selon la revendication 6, dans lequel, le dossier (20) étant articulé par rapport à l'assise (10) autour d'un axe transversal (Y), les axes principaux des prétensionneurs (60, 61) sont parallèles à l'axe transversal (Y).

8. Siège (1) selon la revendication 6 ou 7, dans lequel les deux prétensionneurs (60, 61) sont positionnés tête-bêche.

9. Siège (1) selon l'une des revendications 1 à 8, dans lequel il est prévu au moins une autre bride (50, 51, 52, 53) dont une extrémité est fixée au dossier (20) et dont une autre extrémité est fixée à ladite bride (50, 51, 52, 53).

10. Siège (1) selon la revendication 9, dans lequel ladite bride (50, 51, 52, 53) comporte, sur un tronçon s'étendant du dossier (20) à la jonction avec l'autre bride, une sangle et, sur un tronçon restant, une corde.

11. Véhicule automobile comportant un plancher (80), **caractérisé en ce qu'**il comporte un siège (1) conforme à l'une des revendications 1 à 10, monté sur le plancher (80).
